# EUROPEAN PATENT APPLICATION

(11) **EP 4 582 283 A1**
(43) Date of publication of application: **09.07.2025**
(21) Application number: 24216406.9
(22) Date of filing: 29.11.2024
(51) Int. Cl.: B60L 1/00, B60L 3/00, B60L 15/00, B60L 50/51, B60L 50/64, B60L 53/10, B60L 53/14, B60L 53/22, B60L 53/24, B60L 55/00, B60L 58/21, H02J 3/32, H02J 7/00, H02J 7/02, H02J 7/34, H01M 10/44, H01M 10/625, H02P 27/06

(54) **MOTOR DRIVE SYSTEM WITH EXTERNAL DISCHARGE FUNCTION, AND VEHICLE INCLUDING SAME**

(30) Priority: 20.12.2023 CN 202311767919
(71) Applicant: Nio Technology (Anhui) Co., Ltd, Hefei City, Anhui 230611 (CN)
(72) Inventor: YE, Nan, Hefei City, Anhui, 230611 (CN)
(74) Representative: Vossius & Partner Patentanwälte Rechtsanwälte mbB

(57) **Abstract**

The disclosure relates to a motor drive system with an external discharge function, and a vehicle including same. The motor drive system provides, through an alternating current output interface (230), an alternating current output for external discharge, and the alternating current output interface (230) includes a first output terminal (280) and a second output terminal (290). The motor drive system includes: a battery module (110), a bridge arm module (120), an inductor module (210), a capacitor module (220), and a switching module. The battery module (110) has a battery voltage, and is provided with a battery output terminal (X) at an intermediate voltage position of the battery voltage, and the battery output terminal (X) is connected to the first output terminal (280); the bridge arm module (120) is connected in parallel with the battery module (110); one terminal of the inductor module (210) is connected to the second output terminal (290), and the other terminal is connected to the bridge arm module (120); and one terminal of the capacitor module (220) is connected to the second output terminal (290), and the other terminal of the capacitor module (220) is connected to the first output terminal (280). In the disclosure, when a vehicle is not equipped with an OBC, the external discharge function of the vehicle is implemented by controlling turn-on/turn-off of the bridge arm module (120) and the switching module.

## Description

### Technical Field

The disclosure relates to the field of vehicles, and in particular, to a motor drive system with an external discharge function, and a vehicle including same.

### Background Art

An external discharge (V2L) function of an electric vehicle is a very important and high-value additional function for the electric vehicle. A main application scenario of the external discharge function may be camping, including providing long-term power supply for cooking appliances, entertainment devices (such as a projector and a stereo), and mobile devices (such as a drone, a mobile phone, and a game console) in camping.

Currently, there are two main technical paths for the V2L function: equipped with a bidirectional on-board charger (OBC) and not equipped with an OBC. There is no unified conclusion in the industry on whether an OBC is used as a standard configuration of a vehicle, and from the trend point of view, cancellation of a standard OBC is gradually becoming popular.

When a vehicle is not equipped with an OBC, the vehicle may be equipped with an external portable charging and discharging integrated machine or a built-in discharging machine. However, equipping a vehicle with an external portable charging and discharging integrated machine not only increases the cost of purchasing the portable charging and discharging integrated machine, but also leads to many inconveniences such as carrying the charging and discharging integrated machine and occupying the trunk space. Although theoretically possible, equipping a vehicle with a built-in discharging machine is costly due to the addition of the built-in discharging machine for the discharge function.

### Summary

Embodiments of the disclosure provide a motor drive system with an external discharge function, and a vehicle including same, so as to provide a convenient and low-cost technical solution for implementing the external discharge function when the vehicle is not equipped with an OBC.

According to an aspect of the disclosure, a motor drive system with an external discharge function is provided. The motor drive system provides, through an alternating current output interface, an alternating current output for external discharge, and the alternating current output interface includes a first output terminal and a second output terminal. The motor drive system includes: a battery module, where the battery module has a battery voltage, and is provided with a battery output terminal at an intermediate voltage position of the battery voltage, and the battery output terminal is connected to the first output terminal; a bridge arm module, where the bridge arm module is connected in parallel with the battery module; an inductor module, where one terminal of the inductor module is connected to the second output terminal, and the other terminal is connected to the bridge arm module; and a capacitor module, where one terminal of the capacitor module is connected to the second output terminal, and the other terminal of the capacitor module is connected to the first output terminal.

In some embodiments of the disclosure, optionally, the battery module includes a first battery pack and a second battery pack that are connected in series, where the battery output terminal is located at a connection point between the first battery pack and the second battery pack, and the first battery pack and the second battery pack have equal voltage values.

In some embodiments of the disclosure, optionally, the battery module includes a battery unit and a voltage-dividing capacitor unit that are connected in parallel, where the voltage-dividing capacitor unit includes a first voltage-dividing capacitor and a second voltage-dividing capacitor, the battery output terminal is located at a connection point between the first voltage-dividing capacitor and the second voltage-dividing capacitor, and the first voltage-dividing capacitor and the second voltage-dividing capacitor have equal capacitance values.

In some embodiments of the disclosure, optionally, the bridge arm module includes a plurality of bridge arm switches, and the bridge arm module is configured to connect the inductor module to the battery module by turning on or off relevant bridge arm switches among the plurality of bridge arm switches.

In some embodiments of the disclosure, optionally, the inductor module is formed by a motor winding; and the bridge arm module is configured to connect any one or more phases of the motor winding to the battery module by turning on or off the relevant bridge arm switches among the plurality of bridge arm switches.

In some embodiments of the disclosure, optionally, the inductor module is formed by an external inductor winding; and the bridge arm module is configured to connect the external inductor winding to the battery module by turning on or off the relevant bridge arm switches among the plurality of bridge arm switches.

In some embodiments of the disclosure, optionally, the inductor module is jointly formed by a motor winding and an external inductor winding; and the bridge arm module is configured to connect any one or more phases of the motor winding, and the external inductor winding to the battery module by turning on or off the relevant bridge arm switches among the plurality of bridge arm switches.

In some embodiments of the disclosure, optionally, the motor winding is a star winding, or a delta winding.

In some embodiments of the disclosure, optionally, the motor drive system includes a first terminal switch, a second terminal switch, and a capacitor switch; one terminal of the inductor module is connected to the second output terminal through the second terminal switch; the battery output terminal is connected to the first output terminal through the first terminal switch; and one terminal of the capacitor module is connected to the second output terminal through the second terminal switch, and the other terminal of the capacitor module is connected to the first output terminal sequentially through the capacitor switch and the first terminal switch.

In some embodiments of the disclosure, optionally, the first output terminal and second output terminal of the alternating current output interface are integrated in a direct current charging port for charging the battery module.

According to another aspect of the disclosure, a vehicle is provided, where the vehicle includes any one of the motor drive systems described above.

### Brief Description of the Drawings

The above and other objectives and advantages of the disclosure will be more thorough and clearer from the following detailed description in conjunction with the accompanying drawings, in which the same or similar elements are denoted by the same reference numerals.
FIG. 1 is a schematic diagram of an example of a motor drive system without an external discharge function;
FIG. 2 is a schematic diagram of a motor drive system with an external discharge function according to a first embodiment of the disclosure;
FIG. 3 is a schematic diagram of a motor drive system with an external discharge function according to a second embodiment of the disclosure;
FIG. 4 is a schematic diagram of a motor drive system with an external discharge function according to a third embodiment of the disclosure;
FIG. 5 is a schematic diagram of a motor drive system with an external discharge function according to a fourth embodiment of the disclosure; and
FIG. 6 is a schematic diagram of a motor drive system with an external discharge function according to a fifth embodiment of the disclosure.

### Detailed Description of Embodiments

For brevity and illustrative purposes, the principles of the disclosure are mainly described with reference to its exemplary embodiments. However, those skilled in the art would have readily appreciated that the same principle can be equivalently applied to all types of motor drive systems with an external discharge function and vehicles including same, and same or similar principles can be implemented therein, where any such variations do not depart from the true spirit and scope of the disclosure.

In the description of the disclosure, descriptions with reference to the terms such as "an embodiment", "some embodiments", "example", "specific example", or "some examples" mean that specific features, structures, materials, or characteristics described with reference to the embodiment or example are included in at least one embodiment or example of the disclosure. In the disclosure, illustrative expressions of these terms do not necessarily refer to the same embodiment or example. Moreover, the specific feature, structure, material, or characteristic described may be combined in any suitable manner in any one or more embodiments or examples. Moreover, the ordinal numbers such as "first", "second", and "third" are merely used for the illustrative purpose, and should not be construed as indicating or implying relative importance. In addition, without mutual contradiction, those skilled in the art may incorporate and combine different embodiments or examples and features of the different embodiments or examples described in the disclosure.

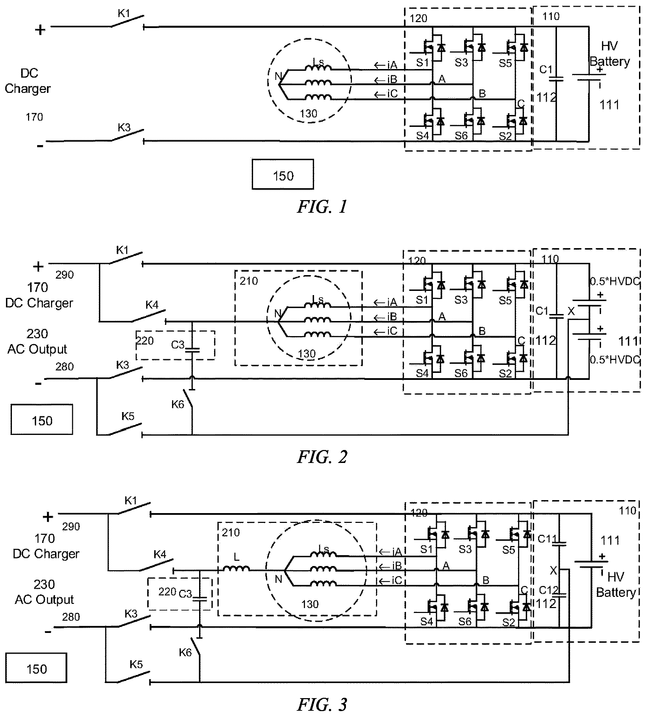

A motor drive system without an external discharge function is described below with reference to FIG. 1.

FIG. 1 is a schematic diagram of an example of a motor drive system without an external discharge function. As shown in FIG. 1, the motor drive system may include a battery module 110, a bridge arm module 120, a motor 130, and a direct current charging port (DC Charger) 170.

In some embodiments, the battery module 110 may include a battery unit 111 and a capacitor unit 112 that are connected in parallel. In this embodiment of the disclosure, the battery unit 111 may be a high-voltage power battery (HV battery) of a vehicle, and the capacitor unit 112 may be a capacitor C1 connected in parallel with the power battery. The battery unit 111 has a battery voltage. Due to a parallel relationship between the capacitor C1 and the battery unit 111, a voltage across the capacitor C1 is equal to the battery voltage. The battery unit 111 has a positive electrode and a negative electrode, and correspondingly, the battery module 110 has a positive electrode side and a negative electrode side. Corresponding to the positive electrode side and negative electrode side of the battery module 110, the battery module 110 also has a battery voltage, and the battery voltage is equal to the battery voltage of the battery unit 111.

In some embodiments, the motor 130 may be a synchronous motor used in the vehicle for driving wheels to run. The motor 130 may include a stator and a rotor, where the stator may include a three-phase winding (also known as a stator winding) Ls. For convenience of illustration, a dashed circle box for accommodating the three-phase winding Ls is used to represent the motor 130 in FIG. 1. In the embodiment shown in FIG. 1, the three-phase winding Ls includes an A-phase winding, a B-phase winding, and a C-phase winding. One terminals of the A-phase winding, the B-phase winding, and the C-phase winding are connected together to form a neutral point N, and the other terminals of the A-phase winding, the B-phase winding, and the C-phase winding are free terminals respectively. As shown in FIG. 1, the respective free terminals of the A-phase winding, the B-phase winding, and the C-phase winding are respectively connected to the bridge arm module 120.

The bridge arm module 120 is connected in parallel with the battery module 110. In the embodiment shown in FIG. 1, the bridge arm module 120 may include three bridge arms, where the three bridge arms are respectively and correspondingly connected to the three-phase winding Ls. For convenience of description, in the disclosure, a bridge arm correspondingly connected to the A-phase winding is referred to as an A-phase bridge arm, a bridge arm correspondingly connected to the B-phase winding is referred to as a B-phase bridge arm, and a bridge arm correspondingly connected to the C-phase winding is referred to as a C-phase bridge arm.

The bridge arm module 120 may include a plurality of bridge arm switches. In the bridge arm module 120, each of the three bridge arms may include a corresponding upper bridge arm and a corresponding lower bridge arm, where each upper bridge arm corresponds to one bridge arm switch, and each lower bridge arm corresponds to one bridge arm switch. Corresponding to the embodiment shown in FIG. 1, the bridge arm module 120 may include six bridge arm switches, which are respectively an A-phase upper bridge arm S1 and an A-phase lower bridge arm S4 in the A-phase bridge arm, a B-phase upper bridge arm S3 and a B-phase lower bridge arm S6 in the B-phase bridge arm, and a C-phase upper bridge arm S5 and a C-phase lower bridge arm S2 in the C-phase bridge arm. In this embodiment of the disclosure, each bridge arm switch may be formed by a switching tube and a diode that are connected in parallel with each other. As an example, the switching tube may be a metal-oxide-semiconductor field-effect transistor (MOS transistor) or an insulated-gate bipolar transistor (IGBT).

As shown in FIG. 1, corresponding connection between the three bridge arms and the three-phase winding Ls may be configured as follows: the free terminal of the A-phase winding is connected to a connection point between the A-phase upper bridge arm S1 and the A-phase lower bridge arm S4; the free terminal of the B-phase winding is connected to a connection point between the B-phase upper bridge arm S3 and the B-phase lower bridge arm S6; and the free terminal of the C-phase winding is connected to a connection point between the C-phase upper bridge arm S5 and the C-phase lower bridge arm S2.

The direct current charging port 170 includes a positive electrode terminal and a negative electrode terminal, and is configured to provide a charging interface for charging the battery module 110. The positive electrode terminal of the direct current charging port 170 is connected to the positive electrode side of the battery module 110 (that is, the positive electrode terminal is connected to the positive electrode of the battery unit 111), and the negative electrode terminal of the direct current charging port 170 is connected to the negative electrode side of the battery module 110 (that is, the negative electrode terminal is connected to the negative electrode of the battery unit 111).

As shown in FIG. 1, the motor drive system may further include a positive electrode charging switch K1 and a negative electrode charging switch K3. The positive electrode charging switch K1 is arranged between the positive electrode terminal of the direct current charging port 170 and the positive electrode of the battery unit 111, and the negative electrode charging switch K3 is arranged between the negative electrode terminal of the direct current charging port 170 and the negative electrode of the battery unit 111. The motor drive system can implement the function of charging the battery unit 111 in the battery module 110 via the direct current charging port 170 only when the positive electrode charging switch K1 and the negative electrode charging switch K3 are both turned on.

In some embodiments, the motor drive system may further include a control module 150. In this embodiment of the disclosure, the control module 150 may be communicatively connected to the positive electrode charging switch K1, the negative electrode charging switch K3, and the bridge arm switches in the bridge arm module 120, so that the switches described above may be turned on or off in response to a control signal sent by the control module 150. For example, when the battery unit 111 is to be charged, the control module 150 may send a turn-on control signal to the positive electrode charging switch K1 and the negative electrode charging switch K3, and send a turn-off control signal to the bridge arm switches in the bridge arm module 120, so that the battery unit 111 can receive a charging current from the direct current charging port 170 by turning on the positive electrode charging switch K1 and the negative electrode charging switch K3.

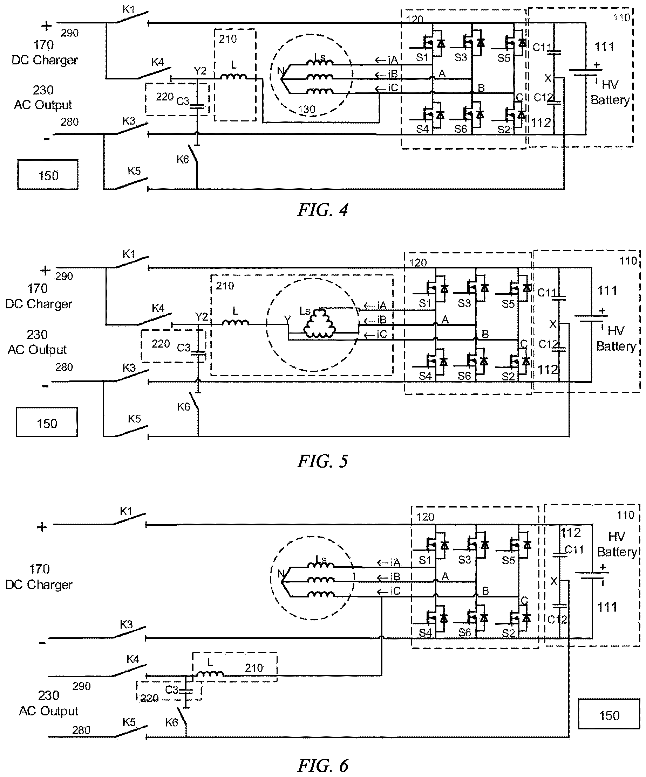

A structural configuration of a motor drive system with an external discharge function according to a plurality of embodiments of the disclosure is described below with reference to FIG. 2 to FIG. 6. For convenience of description, in the disclosure, the embodiment of the motor drive system shown in FIG. 2 is referred to as a first embodiment, the embodiment of the motor drive system shown in FIG. 3 is referred to as a second embodiment, the embodiment of the motor drive system shown in FIG. 4 is referred to as a third embodiment, the embodiment of the motor drive system shown in FIG. 5 is referred to as a fourth embodiment, and the embodiment of the motor drive system shown in FIG. 6 is referred to as a fifth embodiment.

As shown in the first embodiment to the fifth embodiment that are shown in FIG. 2 to FIG. 6, on the basis of the structure of the motor drive system without an external discharge function shown in FIG. 1, a circuit structure of the battery module 110 is improved in the motor drive system with an external discharge function. As shown in FIG. 2 to FIG. 6, in the motor drive system with an external discharge function, the battery module 110 is provided with a battery output terminal X at an intermediate voltage position of a battery voltage of the battery module. For example, when a value of the battery voltage of the battery module 110 (that is, the battery voltage of the battery unit 111) is V, the battery output terminal X may be arranged at a voltage position of 1/2*V in the battery module 110.

On the basis of the structure of the motor drive system without an external discharge function shown in FIG. 1, the motor drive system with an external discharge function may further include an inductor module 210, a capacitor module 220, and an alternating current output interface (AC Output) 230.

The alternating current output interface 230 may include a first output terminal 280 and a second output terminal 290, to provide an output interface for external discharge. In other words, in this embodiment of the disclosure, an alternating current output for external discharge of the motor drive system may be provided through the alternating current output interface 230. In this embodiment of the disclosure, the battery output terminal X led out from the battery module 110 may be connected to the first output terminal 280 of the alternating current output interface 230.

The inductor module 210 may be connected to the battery module 110 through the bridge arm module 120. Correspondingly, the bridge arm module 120 may be configured to connect the inductor module 210 to the battery module 110 by turning on or off the relevant bridge arm switches among a plurality of bridge arm switches. In this embodiment of the disclosure, one terminal of the inductor module 210 is connected to the second output terminal 290 of the alternating current output interface 230, and the other terminal is connected to the bridge arm module 120.

The capacitor module 220 may be configured to connect one terminal to the second output terminal 290 of the alternating current output interface 230, and the other terminal to the first output terminal 280 of the alternating current output interface 230. As an example, the capacitor module 220 may be formed by a capacitor C3.

In some embodiments, the motor drive system with an external discharge function may further include a first terminal switch K5, a second terminal switch K4, and a capacitor switch K6. As shown in FIG. 2 to FIG. 6, one terminal of the inductor module 210 may be connected to the second output terminal 290 of the alternating current output interface 230 through the second terminal switch K4. The battery output terminal X led out from the battery module 110 may be connected to the first output terminal 280 of the alternating current output interface 230 through the first terminal switch K5. One terminal of the capacitor module 220 may be connected to the second output terminal 290 of the alternating current output interface 230 through the second terminal switch K4, and the other terminal of the capacitor module 220 is connected to the first output terminal 280 of the alternating current output interface 230 sequentially through the capacitor switch K6 and the first terminal switch K5. In the disclosure, the positive electrode charging switch K1, the negative electrode charging switch K3, the first terminal switch K5, the second terminal switch K4, and the capacitor switch K6 in this embodiment of the disclosure are collectively referred to as the switching module; and through the control of the switching module, and the switches in the bridge arm module 120, the battery module 110, the inductor module 210, and the capacitor module 220 of the motor drive system may be used to implement the external discharge function of the vehicle.

In some embodiments, on the basis that the control module 150 may be communicatively connected to the positive electrode charging switch K1, the negative electrode charging switch K3, and the bridge arm switches in the bridge arm module 120, the control module 150 may be further communicatively connected to the first terminal switch K5, the second terminal switch K4, and the capacitor switch K6, so that the switches described above may be turned on or off in response to a control signal sent by the control module 150. In this embodiment of the disclosure, the control module 150 may control turn-on/turn-off of the switches in the motor drive system (including the bridge arm switches in the bridge arm module 120, the positive electrode charging switch K1, the negative electrode charging switch K3, the first terminal switch K5, the second terminal switch K4, and the capacitor switch K6) to enable the motor drive system to be in a charging state where the battery unit 111 is charged with direct current from the direct current charging port 170 or in a discharging state where the battery unit 111 discharges alternating current to the alternating current output interface 230. In some embodiments, the control module 150 may also control the corresponding switches in the motor drive system to be turned off, so that the motor drive system is completely turned off.

For example, when the battery unit 111 is to be charged, the control module 150 may send a turn-on control signal to the positive electrode charging switch K1 and the negative electrode charging switch K3, and send a turn-off control signal to the bridge arm switches in the bridge arm module 120, the first terminal switch K5, the second terminal switch K4, and the capacitor switch K6, so that the battery unit 111 can receive a direct current charging current from the direct current charging port 170 by turning on the positive electrode charging switch K1 and the negative electrode charging switch K3.

For example, when the battery unit 111 is to discharge externally, the control module 150 may send a turn-off control signal to the positive electrode charging switch K1 and the negative electrode charging switch K3, send a turn-on control signal to the first terminal switch K5, the second terminal switch K4, and the capacitor switch K6, and send corresponding turn-off control signals or turn-on control signals to the bridge arm switches in the bridge arm module 120 based on an application configuration of the motor drive system, so that the battery unit 111 can output an alternating current discharging current to the alternating current output interface 230 by turning on the first terminal switch K5, the second terminal switch K4, the capacitor switch K6, and the bridge arm module 120.

As an example, in the motor drive system with an external charging function, power output by the alternating current output interface 230 may be power frequency alternating current with a power ranging from 1 kW to 3 kW.

In this embodiment of the disclosure, the battery output terminal X is led out from the intermediate voltage position of the battery module 111. In some embodiments, the battery output terminal X may be led out from the battery unit 111 of the battery module 110. For example, a midpoint among a plurality of series-connected battery packs in the battery unit 111 may be selected, and a terminal is led out from the midpoint to act as the battery output terminal X, so that two sets of voltages with equal voltage values are formed in the battery unit 111.

FIG. 2 shows an embodiment of leading out the battery output terminal X from the battery unit 111. As shown in FIG. 2, in this embodiment, the battery module 110 includes a battery unit 111 and a capacitor unit 112 that are connected in parallel. The capacitor unit 112 may be formed by a capacitor C1. The battery unit 111 may include a first battery pack 113 and a second battery pack 114 that are connected in series, where the battery output terminal X is located at a connection point between the first battery pack 113 and the second battery pack 114, and the first battery pack 113 and the second battery pack 114 have equal voltage values. Therefore, in the embodiment shown in FIG. 2, the battery output terminal X has an intermediate voltage of the battery unit 111.

In some embodiments, the battery output terminal X may be led out from the capacitor unit 112 of the battery module 110. For example, a capacitor unit 112 may be configured to be formed by two capacitors that are connected in series and have equal capacitance values, and a terminal is led out from a position between the two capacitors that are connected in series to act as the battery output terminal X. Since two terminals of the capacitor unit 112 are externally connected to the positive and negative electrode terminals of the battery unit 111, the battery output terminal X has an intermediate voltage of the battery unit 111 after voltage division by the two capacitors that are connected in series and have equal capacitance values. In the embodiment of leading out the battery output terminal X from the capacitor unit 112, the capacitor unit 112 plays a role in voltage division. In the disclosure, the capacitor unit 112 that plays a role in voltage division is referred to as a voltage-dividing capacitor unit 112.

FIG. 3 shows an embodiment of leading out the battery output terminal X from the capacitor unit 112. As shown in FIG. 3, in this embodiment, the battery module 110 includes a battery unit 111 and a voltage-dividing capacitor unit 112 that are connected in parallel, where the voltage-dividing capacitor unit 112 may include a first voltage-dividing capacitor C11 and a second voltage-dividing capacitor C12, and the first voltage-dividing capacitor C11 and the second voltage-dividing capacitor C12 have equal capacitance values. Correspondingly, the battery output terminal X may be located at a connection point between the first voltage-dividing capacitor C11 and the second voltage-dividing capacitor C12, so that the battery output terminal X may have an intermediate voltage of the battery unit 111.

In this embodiment of the disclosure, an inductor module 210 is arranged in the motor drive system with an external discharge function. An inductance value provided by the inductor module 210 and a capacitance value provided by the capacitor module 220 may be determined based on switching frequency of the corresponding bridge arm switches in the bridge arm module 120. In some embodiments, the inductor module 210 may be jointly formed by a motor winding Ls and an additional inductor winding L. Using the original motor winding Ls in the motor drive system as the inductor module 210 can reduce configuration costs of configuring the external discharge function for the motor drive system, and reduce an additional size caused by configuration of the external discharge function for the motor drive system. In some embodiments, if an inductance value of the original motor winding Ls in the motor drive system meets configuration requirements, the inductor module 210 may be formed by the motor winding Ls, without the need to add an additional inductor winding L. In some embodiments, the inductor module 210 may be formed by an additional inductor winding L, without using the original motor winding Ls in the motor drive system. Using the added additional inductor winding L as the inductor module 210 instead of using the motor winding Ls as the inductor module 210 can effectively reduce vibration of the motor drive system during the external charging operation, and avoid unexpected torque generated by a motor rotor.

FIG. 2 shows an embodiment of forming the inductor module 210 by using the motor winding Ls. As shown in FIG. 2, in this embodiment, the neutral point N of the three-phase winding Ls is connected to the second output terminal 290 of the alternating current output interface 230 via the second terminal switch K4. In the embodiment of forming the inductor module 210 by using the three-phase winding Ls of the motor 130, any one, two or three phases of the three-phase winding Ls may be selected to participate in the external discharge operation of the motor drive system. For convenience of description, in the disclosure, a winding selected from the three-phase winding to participate in the external discharge operation is referred to as a working winding.

When the motor drive system performs the external discharge operation, the bridge arm switches in the bridge arm associated with the working winding may be turned on, and the bridge arm switches in the remaining bridge arms may be turned off. Correspondingly, the bridge arm module 120 may be configured to connect the corresponding working winding in the motor winding Ls to the battery module 110 by turning on or off the relevant bridge arm switches among the plurality of bridge arm switches.

For example, when the A-phase winding is selected as the working winding, the A-phase upper bridge arm S1 and the A-phase lower bridge arm S4 in the A-phase bridge arm may be turned on, and the B-phase upper bridge arm S3 and the B-phase lower bridge arm S6 in the B-phase bridge arm, and the C-phase upper bridge arm S5 and the C-phase lower bridge arm S2 in the C-phase bridge arm may be turned off, so that the A-phase winding is connected to the battery module 110.

In some embodiments, for bridge arm switches in the bridge arm module 120 that need to be turned on, the control module 150 may send a turn-on control signal to the relevant bridge arm switches, to control the duty cycles of the corresponding bridge arm switches. Compared with selecting only one phase of the stator winding Ls as the working winding to participate in the external discharge operation, selecting two or three phases of windings as the working windings enables the alternating current output interface 230 to have a higher output power.

In the example in which two or three phases of the stator winding Ls are selected as the working windings, the control module 150 may be configured to control the duty cycles of the bridge arm switches in the corresponding two or three bridge arms to have the same timing pace. For example, in the first embodiment shown in FIG. 2, if the A-phase winding and the B-phase winding are selected as the working windings to participate in the external discharge operation, the control module 150 may control the A-phase upper bridge arm S1 and the A-phase lower bridge arm S4 in the A-phase bridge arm, and the B-phase upper bridge arm S3 and the B-phase lower bridge arm S6 in the B-phase bridge arm to be turned on, and control the C-phase upper bridge arm S5 and the C-phase lower bridge arm S2 in the C-phase bridge arm to be turned off. Meanwhile, the duty cycles of the A-phase upper bridge arm S1, the A-phase lower bridge arm S4, the B-phase upper bridge arm S3, and the B-phase lower bridge arm S6 have the same timing pace.

FIG. 3 shows an embodiment of forming the inductor module 210 by using the motor winding Ls and the additional inductor winding L. As shown in FIG. 3, in this embodiment, one terminal of the additional inductor winding L may be connected to the second output terminal 290 of the alternating current output interface 230 through the second terminal switch K4, and the other terminal may be connected to the neutral point N of the three-phase winding Ls.

The configuration strategy of the inductor module 210 in the second embodiment shown in FIG. 3 is similar to that in the first embodiment shown in FIG. 2, and any one, two or three phases of the stator winding Ls may be selected to participate in the external discharge operation of the motor drive system. Details are not repeated here. In addition, in the second embodiment, the control strategy of the corresponding bridge arm switches in the bridge arm module 120 based on the selection of the stator winding Ls may also be performed with reference to that in the first embodiment. Details are not repeated here.

FIG. 4 and FIG. 6 show embodiments of forming the inductor module 210 by using the additional inductor winding L. As shown in FIG. 4 and FIG. 6, in the embodiments, one terminal of the additional inductor winding L may be connected to the second output terminal 290 of the alternating current output interface 230 through the second terminal switch K4, and the other terminal is connected between the upper bridge arm and the lower bridge arm of one of the bridge arms in the bridge arm module 120. The third embodiment shown in FIG. 4 and the fifth embodiment shown in FIG. 6 show examples in which the other terminal of the additional inductor winding L is connected to the C-phase bridge arm. In other embodiments, the other terminal of the additional inductor winding L may alternatively be connected to another bridge arm (for example, the A-phase bridge arm or the B-phase bridge arm).

When the motor drive system performs an external discharge operation, the bridge arm switches in the bridge arm associated with the additional inductor winding L may be turned on, and the bridge arm switches in the remaining bridge arms may be turned off. Correspondingly, the bridge arm module 120 may be configured to connect the additional inductor winding L to the battery module 110 by turning on or off the relevant bridge arm switches among the plurality of bridge arm switches. For example, when the other terminal of the additional inductor winding L is connected to the C-phase bridge arm, the C-phase upper bridge arm S5 and the C-phase lower bridge arm S2 in the C-phase bridge arm may be turned on, and the A-phase upper bridge arm S1 and the A-phase lower bridge arm S4 in the A-phase bridge arm, and the B-phase upper bridge arm S3 and the B-phase lower bridge arm S6 in the B-phase bridge arm may be turned off, so that the additional inductor winding L is connected to the battery module 110. In some embodiments, for bridge arm switches in the bridge arm module 120 that need to be turned on, the control module 150 may send a turn-on control signal to the relevant bridge arm switches, to control the duty cycles of the corresponding bridge arm switches.

In the first embodiment shown in FIG. 2, the second embodiment shown in FIG. 3, the third embodiment shown in FIG. 4, and the fifth embodiment shown in FIG. 6, tail terminals of the three windings in the motor winding Ls are connected together to form the neutral point N, so as to form a star winding configuration. In some other embodiments, the motor winding Ls may alternatively have a delta winding configuration.

FIG. 5 shows an embodiment in which the motor winding Ls has a delta winding configuration. As shown in FIG. 5, the three windings of the motor winding Ls are connected together end-to-end, to form the delta winding configuration. Three vertices of a triangle formed by the motor winding Ls are respectively connected to the corresponding bridge arms in the bridge arm module 120. For convenience of description, in the disclosure, the three vertices of the triangle that correspond to the motor winding Ls are respectively denoted as an A-phase vertex, a B-phase vertex, and a C-phase vertex; and the bridge arm in the bridge arm module 120 that is connected to the A-phase vertex is denoted as the A-phase bridge arm, the bridge arm in the bridge arm module that is connected to the B-phase vertex is denoted as the B-phase bridge arm, and the bridge arm in the bridge arm module that is connected to the C-phase vertex is denoted as the C-phase bridge arm.

In the fourth embodiment shown in FIG. 5, the inductor module 210 includes the additional inductor winding L. Correspondingly, as an example, the inductor module 210 may be jointly formed by the motor winding Ls and the additional inductor winding L. As shown in FIG. 5, one terminal of the additional inductor winding L may be connected to the second output terminal 290 of the alternating current output interface 230 through the second terminal switch K4, and the other terminal is connected to a certain-phase vertex of the triangle corresponding to the motor winding Ls. FIG. 5 shows an example in which the other terminal of the additional inductor winding L is connected to the C-phase vertex. In other embodiments, the other terminal of the additional inductor winding L may alternatively be connected to the another-phase vertex (for example, the A-phase vertex or the B-phase vertex).

In some embodiments, the control module 150 may control the two bridge arm switches in the A-phase bridge arm in the bridge arm module 120 to be turned on (with the remaining bridge arms being turned off), or control the two bridge arm switches in the B-phase bridge arm in the bridge arm module 120 to be turned on (with the remaining bridge arms being turned off), so that the corresponding winding in the stator winding Ls participates in the external discharge operation as the working winding. In some embodiments, the control module 150 may control the four bridge arm switches in the A-phase bridge arm and the B-phase bridge arm in the bridge arm module 120 to be turned on, so that the corresponding two windings in the stator winding Ls participate in the external discharge operation as the working windings. In the example in which the A-phase bridge arm and the B-phase bridge arm are turned on to enable the two windings in the stator winding Ls of the delta configuration to participate in the external discharge operation, the control module 150 may be configured to control the duty cycles of the bridge arm switches in the A-phase bridge arm and the duty cycles of the bridge arm switches in the B-phase bridge arm to have different timing paces.

The configuration mode of the fourth embodiment shown in FIG. 5 in which the motor winding Ls and the additional inductor winding L jointly form the inductor module 210 is described above. In another configuration example, the inductor module 210 in the fourth embodiment may be formed by using only the additional inductor winding L. For example, the control module 150 may connect the additional inductor winding L to the battery module 110 by controlling the two bridge arm switches in the C-phase bridge arm in the bridge arm module 120 to be turned on, and the bridge arms of other phases to be turned off.

When the motor winding Ls is a delta winding, FIG. 5 shows an embodiment of adding an additional inductor winding L to the motor drive system. In other embodiments, the additional inductor winding L may alternatively not be arranged in the motor drive system, and only the motor winding Ls of the delta configuration is used to form the inductor module 210. The manner of forming the circuit structure of the inductor module 210 by using only the motor winding Ls of the delta configuration may be implemented with reference to FIG. 5, and only the additional inductor winding L in the motor drive system in the fourth embodiment needs to be replaced with a wire. In addition, when the inductor module 210 of the motor drive system is formed by using only the motor winding Ls of the delta configuration, the control strategy of the corresponding bridge arm switches in the bridge arm module 120 may also be performed with reference to that in the fourth embodiment. Details are not repeated here.

As described above, in the motor drive system with an external discharge function, both the direct current charging port 170 for charging the battery module 110, and the alternating current output interface 230 for external discharge may be arranged. In some embodiments, the alternating current output interface 230 may be integrated in the direct current charging port 170. As shown in FIG. 2 to FIG. 5, the first output terminal 280 of the alternating current output interface 230 may be integrated at the negative electrode terminal of the direct current charging port 170, and the second output terminal 290 of the alternating current output interface 230 may be integrated at the positive electrode terminal of the direct current charging port 170. In this embodiment, the motor drive system may use the original direct current charging port 170 of the vehicle to provide a user with an alternating current discharging function. For example, after the vehicle comes to a complete stop, the vehicle may use the external discharge function to externally output power through the direct current charging port 170.

As shown in FIG. 2 to FIG. 5, in the example in which the alternating current output interface 230 and the direct current charging port 170 are integrated, the two output terminals (that is, the first output terminal 280 and the second output terminal 290) of the alternating current output interface 230 are controlled to be turned on or off through the first terminal switch K5 and the second terminal switch K4 respectively, and the positive and negative electrode terminals of the direct current charging port 170 are controlled to be turned on or off through the positive electrode charging switch K1 and the negative electrode charging switch K3 respectively. Therefore, in the motor drive system, the external discharge function of the alternating current output interface 230 and an internal charging function of the direct current charging port 170 do not interfere with each other when in use.

In some embodiments, the alternating current output interface 230 and the direct current charging port 170 may alternatively be arranged separately. As shown in FIG. 6, the two output terminals of the alternating current output interface 230 (that is, the first output terminal 280 and the second output terminal 290) and the positive and negative electrode terminals of the direct current charging port 170 are led out through different wires respectively. In this embodiment, the motor drive system may use the alternating current output interface 230 that is different from the direct current charging port 170 to provide the user with the alternating current discharging function.

In this embodiment of the disclosure, the battery module 110 in the motor drive system without an external discharge function (for example, the motor drive system shown in FIG. 1) is improved, so that the battery output terminal X is led out from the intermediate voltage position of the battery module 110; and the inductor module 210, the capacitor module 220, and the alternating current output interface 230 are further arranged.

For the improvement of the battery module 110, this embodiment of the disclosure provides two manners of leading out the battery output terminal X from the intermediate voltage position of the battery module 110: The first manner is to improve the battery unit 111, so that the battery output terminal X is led out from the intermediate voltage position (for example, the solution shown in FIG. 2); and the second manner is to configure the capacitor unit 112 to include two capacitors with equal capacitance values, so that the battery output terminal X is led out from the intermediate voltage position between the two capacitors (for example, the solution shown in FIG. 3 to FIG. 6).

For the arrangement of the inductor module 210, this embodiment of the disclosure provides three manners of forming the inductor module 210: The first manner is to form the inductor module 210 by using the motor winding Ls (for example, the solution shown in FIG. 2); the second manner is to form the inductor module 210 by using both the motor winding Ls and the additional inductor winding L (for example, the solution shown in FIG. 3); and the third manner is to form the inductor module 210 by using the additional inductor winding L (for example, the solution shown in FIG. 4). In addition, for the configuration of the motor winding Ls, the embodiment of the disclosure provides two configuration manners: the star winding (such as the solution shown in FIG. 2), and the delta winding (for example, the solution shown in FIG. 5).

For the arrangement of the alternating current output interface 230, this embodiment of the disclosure provides two arrangement manners: The first manner is to integrate the alternating current output interface 230 with the direct current charging port 170 (for example, the solution shown in FIG. 2 to FIG. 5); and the second manner is to separately arrange the alternating current output interface 230 and the direct current charging port 170 (for example, the solution shown in FIG. 6).

FIG. 2 to FIG. 6 show some examples of combinations of the foregoing optional structures. In other embodiments, for different configuration manners of the battery module 110, the inductor module 210, and the alternating current output interface 230, any combination of the configuration manners described above in the disclosure may implement the external charging function of the motor drive system.

The disclosure further provides a vehicle. The vehicle includes any one of the motor drive systems according to the foregoing embodiments of the disclosure. The vehicle in this embodiment of the disclosure may have both an internal direct current charging function and an external alternating current discharging function. When internal direct current charging is to be performed, the control module 150 may turn on the positive electrode charging switch K1 and the negative electrode charging switch K3, and turn off the first terminal switch K5, the second terminal switch K4, and the capacitor switch K6 in response to the user's request for charging the battery unit 111. When external alternating current discharge is to be performed, the control module 150 may turn on the first terminal switch K5, the second terminal switch K4, and the capacitor switch K6, and turn off the positive electrode charging switch K1 and the negative electrode charging switch K3 in response to the user's request for external discharge, and additionally control, based on configuration requirements of the inductor module 210, the bridge arm switches in the bridge arm module 120 to be turned on or off.

The vehicle referred to in the disclosure may indicate a suitable vehicle provided with a motor drive system that is composed of at least a battery, a power conversion device, and a drive motor, for example, a hybrid vehicle, an electric vehicle, a plug-in hybrid electric vehicle, and the like. The hybrid vehicle is a vehicle with two or more power sources, such as a vehicle powered by both gasoline and electricity.

In the embodiments of the disclosure, the motor drive system of the vehicle is improved and configured, so as to provide the vehicle with a convenient and low-cost technical solution for implementing the external discharge function when the vehicle is not equipped with an OBC.

The related user personal information that may be involved in the embodiments of the disclosure is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user personal information processed by the applicant may vary according to a specific product/service scenario, depends on the specific scenario in which the user uses the product/service, and may involve account information, device information, driving information, vehicle information, or other related information of the user. The applicant treats and handles the user personal information with a high degree of diligence.

The applicant attaches great importance to the security of the user personal information and has taken appropriate and feasible security measures in line with industry standards to protect the user information and prevent unauthorized access, public disclosure, use, modification, damage or loss of the personal information.

The foregoing descriptions are merely the implementations of the disclosure, but are not intended to limit the protection scope of the disclosure. Any feasible variation or replacement conceived by those skilled in the art within the technical scope disclosed in the disclosure shall fall within the protection scope of the disclosure. Without conflicts, the implementations of the disclosure and features in the implementations may also be combined with each other. The protection scope of the disclosure shall be subject to recitations of the claims.

## Claims

1. A motor drive system with an external discharge function, wherein the motor drive system provides, through an alternating current output interface, an alternating current output for external discharge, the alternating current output interface comprises a first output terminal and a second output terminal, and the motor drive system comprises:
a battery module, wherein the battery module has a battery voltage, and is provided with a battery output terminal at an intermediate voltage position of the battery voltage, and the battery output terminal is connected to the first output terminal;
a bridge arm module, wherein the bridge arm module is connected in parallel with the battery module;
an inductor module, wherein one terminal of the inductor module is connected to the second output terminal, and the other terminal is connected to the bridge arm module; and
a capacitor module, wherein one terminal of the capacitor module is connected to the second output terminal, and the other terminal of the capacitor module is connected to the first output terminal.

2. The motor drive system according to claim 1, wherein the battery module comprises a first battery pack and a second battery pack that are connected in series, wherein the battery output terminal is located at a connection point between the first battery pack and the second battery pack, and the first battery pack and the second battery pack have equal voltage values.

3. The motor drive system according to claim 1 or 2, wherein the battery module comprises a battery unit and a voltage-dividing capacitor unit that are connected in parallel, wherein the voltage-dividing capacitor unit comprises a first voltage-dividing capacitor and a second voltage-dividing capacitor, the battery output terminal is located at a connection point between the first voltage-dividing capacitor and the second voltage-dividing capacitor, and the first voltage-dividing capacitor and the second voltage-dividing capacitor have equal capacitance values.

4. The motor drive system according to any one of claims 1 to 3, wherein the bridge arm module comprises a plurality of bridge arm switches, and the bridge arm module is configured to connect the inductor module to the battery module by turning on or off relevant bridge arm switches among the plurality of bridge arm switches.

5. The motor drive system according to claim 4, wherein the inductor module is formed by a motor winding; and
the bridge arm module is configured to connect any one or more phases of the motor winding to the battery module by turning on or off the relevant bridge arm switches among the plurality of bridge arm switches.

6. The motor drive system according to claim 4 or 5, wherein the inductor module is formed by an external inductor winding; and
the bridge arm module is configured to connect the external inductor winding to the battery module by turning on or off the relevant bridge arm switches among the plurality of bridge arm switches.

7. The motor drive system according to any one of claims 4 to 7, wherein the inductor module is jointly formed by a motor winding and an external inductor winding; and
the bridge arm module is configured to connect any one or more phases of the motor winding, and the external inductor winding to the battery module by turning on or off the relevant bridge arm switches among the plurality of bridge arm switches.

8. The motor drive system according to claim 5 or 7, wherein the motor winding is a star winding, or a delta winding.

9. The motor drive system according to any one of claims 1 to 8, wherein the motor drive system comprises a first terminal switch, a second terminal switch, and a capacitor switch;
one terminal of the inductor module is connected to the second output terminal through the second terminal switch;
the battery output terminal is connected to the first output terminal through the first terminal switch; and
one terminal of the capacitor module is connected to the second output terminal through the second terminal switch, and the other terminal of the capacitor module is connected to the first output terminal sequentially through the capacitor switch and the first terminal switch.

10. The motor drive system according to claim 9, wherein the first output terminal and second output terminal of the alternating current output interface are integrated in a direct current charging port for charging the battery module.

11. A vehicle, comprising the motor drive system according to any one of claims 1 to 10.
